# EUROPEAN PATENT APPLICATION

(11) **EP 2 963 913 A1**
(43) Date of publication of application: **06.01.2016**
(21) Application number: 14756391.0
(22) Date of filing: 27.02.2014
(51) Int. Cl.: H04N 5/232

(54) **SHOOTING METHOD AND APPARATUS OF ELECTRONIC DEVICE, AND ELECTRONIC DEVICE**

(30) Priority: 27.02.2013 CN 201310061987
(71) Applicant: Huawei Device Co., Ltd., Shenzhen, Guangdong 518129 (CN)
(72) Inventor: ZHANG, Hua, Shenzhen Guangdong 518129 (CN); SUN, Rui, Shenzhen Guangdong 518129 (CN); TENG, Zhihui, Shenzhen Guangdong 518129 (CN); JIAO, Lintao, Shenzhen Guangdong 518129 (CN); LI, Zhenggang, Shenzhen Guangdong 518129 (CN)
(74) Representative: Lord, Michael
(86) International application number: PCT/CN2014/072599
(87) International publication number: WO 2014/131358

(57) **Abstract**

Embodiments of the present invention provide a shooting method and apparatus of an electronic device, and the electronic device. The shooting method of an electronic device provided in the embodiments of the present invention includes: enabling a front-facing camera to prepare for shooting; and when the front-facing camera is used to perform shooting, adjusting a pixel grayscale of a liquid crystal display to a set grayscale value and/or adjusting a color of the liquid crystal display to a set color, so as to supplement light to an object being photographed. In the embodiments of the present invention, a pixel grayscale and/or a color of a liquid crystal display are/is adjusted so as to supplement light to an object being photogrphed, thereby resolving a problem of a dim shooting effect of a front-facing camera.

## Description

This application claims priority to Chinese Patent Application No. 201310061987.3, filed with the Chinese Patent Office on February 27, 2013 and entitled "SHOOTING METHOD AND APPARATUS OF ELECTRONIC DEVICE, AND ELECTRONIC DEVICE", which is hereby incorporated by reference in its entirety.

### TECHNICAL FIELD

Embodiments of the present invention relate to photography techniques, and in particular, to a shooting method and apparatus of an electronic device, and the electronic device.

### BACKGROUND

As multimedia electronic devices develop rapidly, most of multimedia electronic devices, such as mobile phones and tablet computers, have been equipped with a front-facing camera, so as to meet a user's requirement for taking a self-portrait.

Different from a rear-facing camera, a front-facing camera does not have a flash; therefore, when a user performs shooting at night or in another dim environment, a shooting effect is dim, a color is not bright, and definition is low. In the prior art, a front flash may be added for a front-facing camera or an external supplementary light may be used to supplement light, so as to resolve a problem of a dim shooting effect of the front-facing camera.

If a front flash is added for supplementing light, the front flash occupies large space and affects appearance; in addition, it is not proper to enable the flash directly in the eyes of people.

If an external supplementary light is used to supplement light, the external supplementary light is not easy to carry or easy to use.

### SUMMARY

Embodiments of the present invention provide a shooting method and apparatus of an electronic device, and the electronic device, so as to resolve a problem of a dim shooting effect of a front-facing camera.

According to a first aspect, an embodiment of the present invention provides a shooting method of an electronic device, including:
enabling a front-facing camera to prepare for shooting; and
when the front-facing camera is used to perform shooting, adjusting a pixel grayscale of a liquid crystal display to a set grayscale value and/or adjusting a color of the liquid crystal display to a set color, so as to supplement light to a object being photographed.

In a first possible implementation manner of the first aspect, the adjusting a pixel grayscale of a liquid crystal display to a set grayscale value includes:
adjusting pixel transmittance of the liquid crystal display and/or adjusting brightness of backlight of the liquid crystal display, so as to adjust the pixel grayscale of the liquid crystal display to the set grayscale value.

According to the first possible implementation manner of the first aspect, in a second possible implementation manner, the adjusting brightness of backlight of the liquid crystal display includes:
adjusting the brightness of the backlight of the liquid crystal display to maximum brightness.

According to the first possible implementation manner of the first aspect, in a third possible implementation manner, the adjusting a pixel grayscale of a liquid crystal display to a set grayscale value and adjusting a color of the liquid crystal display to a set color includes:
adjusting the liquid crystal display to an all white mode.

In a fourth possible implementation manner of the first aspect, the adjusting a color of the liquid crystal display to a set color includes:
adjusting a color of backlight of the liquid crystal display to the set color.

According to a second aspect, an embodiment of the present invention provides a shooting apparatus of an electronic device, including: a camera enabling module, configured to enable a front-facing camera to prepare for shooting; and a liquid crystal display adjusting module, configured to: when the front-facing camera is used to perform shooting, adjust a pixel grayscale of a liquid crystal display to a set grayscale value and/or adjust a color of the liquid crystal display to a set color, so as to supplement light to an object being photographed.

In a first possible implementation manner of the second aspect, the liquid crystal display adjusting module includes a grayscale adjusting unit, configured to: when the front-facing camera is used to perform shooting, adjust pixel transmittance of the liquid crystal display and/or adjust brightness of backlight of the liquid crystal display, so as to adjust the pixel grayscale of the liquid crystal display to the set grayscale value.

In a second possible implementation manner of the second aspect, the liquid crystal display adjusting module is specifically configured to: when the front-facing camera is used to perform shooting, adjust the liquid crystal display to an all white mode.

In a third possible implementation manner of the second aspect, the liquid crystal display adjusting module further includes a color adjusting unit, configured to: when the front-facing camera is used to perform shooting, adjust a color of backlight of the liquid crystal display, so as to adjust the color of the liquid crystal display to the set color.

According to a third aspect, an embodiment of the present invention provides an electronic device, including a front-facing camera and a liquid crystal display, and further including a shooting apparatus of an electronic device provided in any embodiment of the present invention.

In a first possible implementation manner of the third aspect, the electronic device is a mobile terminal.

According to the shooting method and apparatus of an electronic device, and the electronic device proposed in the embodiments of the present invention, a pixel grayscale and/or a color of a liquid crystal display are/is adjusted, so as to implement that light is supplemented to a object being photographed in a dim or low-light environment, thereby resolving a problem of a dim shooting effect of a front-facing camera. In addition, a backlight source of the liquid crystal display is used as a supplementary light source in the embodiments of the present invention; therefore, a product volume is not increased, and good usability is obtained.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a flowchart of a shooting method of an electronic device according to Embodiment 1 of the present invention;
FIG. 2 is a flowchart of a shooting method of an electronic device according to Embodiment 2 of the present invention; and
FIG. 3 is a schematic structural diagram of an electronic device according to Embodiment 4 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

### Embodiment 1

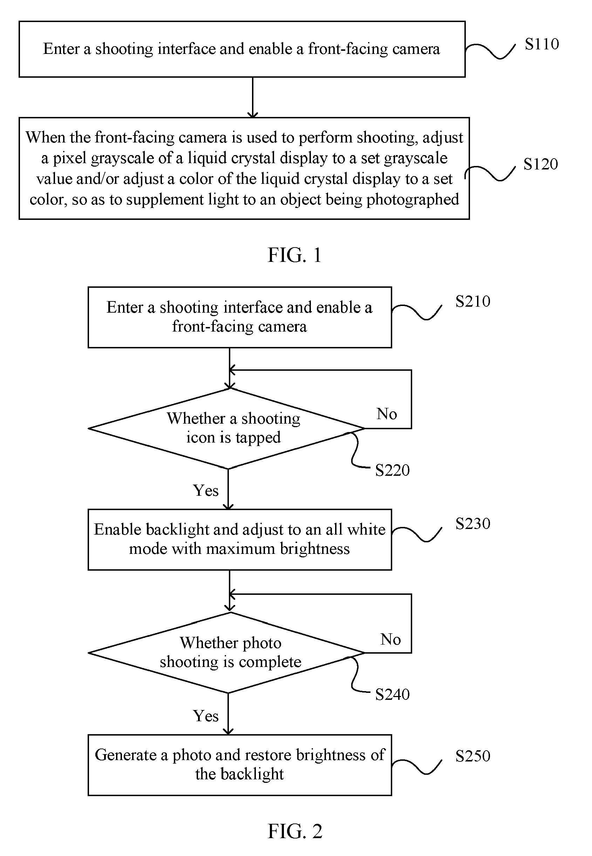

Embodiment 1 of the present invention provides a shooting method of an electronic device, where the method in this embodiment is applicable to a situation in which an electronic device having a front-facing camera and a liquid crystal display performs shooting in a dim environment. The method is executed by a shooting apparatus of an electronic device, where the apparatus is generally implemented in a manner of hardware and/or software and is integrated into the electronic device. FIG. 1 is a flowchart of the shooting method of an electronic device according to Embodiment 1 of the present invention, where the shooting method of an electronic device provided in this embodiment includes the following steps:
Step S110: Enter a shooting interface and enable a front-facing camera.

In the shooting method of an electronic device shown in Embodiment 1 of the present invention, a related operation is performed only when the front-facing camera is used to perform shooting; therefore, a user needs to first enable the front-facing camera to prepare for shooting. Certainly, in addition to a manner of entering the shooting interface and enableing the front-facing camera mentioned above, a method for enabling the front-facing camera to prepare for shooting may be performed in another manner, for example, pressing a specific shortcut key to enable the front-facing camera to prepare for shooting, which is not limited in this embodiment.

Step S120: When the front-facing camera is used to perform shooting, adjust a pixel grayscale of a liquid crystal display to a set grayscale value and/or adjust a color of the liquid crystal display to a set color, so as to supplement light to a object being photographed.

Shooting includes photo shooting and video shooting. In step S120, the pixel grayscale of the liquid crystal display is adjusted to the set grayscale value, that is, the liquid crystal display is enabled to emit light, so that illumination can be provided for the object being photographed, and light supplementing is implemented. The color of the liquid crystal display may also be adjusted, and a light source of the object being photographed can be supplemented to some extent. An opportunity to adjust the grayscale value or the color is at least at the time of shooting, for example, light may be always being supplemented after the shooting interface is entered, or light may be supplemented at the moment of tapping to shoot a photo or in a video shooting process.

According to the shooting method of an electronic device provided in this embodiment, in detail, when a user needs to perform shooting, the user first selects a front-facing camera to prepare for shooting, and then when using the front-facing camera to perform shooting, adjusts a pixel grayscale of a liquid crystal display to a set grayscale value and/or adjusts a color of the liquid crystal display to a set color. Specifically, backlight of the liquid crystal display is used as a simulated flash by adjusting the pixel grayscale and/or the color of the liquid crystal display, so as to supplement light to a shooting object when shooting is performed in a dim or low light environment.

In the shooting method of an electronic device provided in this embodiment, a problem that a shooting effect is dim, a color is not bright, and definition is low when a front-facing camera is used to perform shooting in a dim or low-light environment can be resolved. In addition, there is no need to additionally dispose a flash or an external supplementary light; therefore, product costs are not increased, a product volume is not increased, and good usability and portability are obtained.

Based on the foregoing technical solution of this embodiment, the operation of adjusting the pixel grayscale of the liquid crystal display to the set grayscale value is preferably: adjusting pixel transmittance of the liquid crystal display and/or adjusting brightness of backlight of the liquid crystal display, so as to adjust the pixel grayscale of the liquid crystal display to the set grayscale value.

A light supplementing effect of the liquid crystal display is mainly affected by the pixel transmittance and the brightness of the backlight of the liquid crystal display. The pixel grayscale is adjusted by adjusting the pixel transmittance of the liquid crystal display and/or adjusting the brightness of the backlight of the liquid crystal display, any one of which can be used to adjust the light supplementing effect of the liquid crystal display. Adjusting the pixel transmittance of the liquid crystal display may be adjusting torsion angles of liquid crystal molecules by controlling the electric field, so as to further adjust the pixel transmittance of the display.

In the foregoing solution, adjusting the brightness of the backlight of the liquid crystal display may be specifically adjusting the brightness of the backlight of the liquid crystal display to maximum brightness. Adjusting the backlight of the liquid crystal display to the maximum is easy to operate, supplementary light is brighter, and a light supplementing effect is better during shooting.

Based on the foregoing technical solution in this embodiment, adjusting the pixel grayscale of the liquid crystal display to the set grayscale value and adjusting the color of the liquid crystal display to the set color may be specifically adjusting the liquid crystal display to an all white mode. The all white mode generally is a state in which the liquid crystal display displays an overall image; and generally is implemented by adjusting the pixel grayscale of the liquid crystal display to the maximum and then cooperating with adjustment of RGB colors. For example, all pixel grayscales of red, green, and blue may be adjusted to the maximum, and then an all white image can be presented.

The liquid crystal display is adjusted to the all white mode, so that the liquid crystal display has higher brightness that is closer to a flashing effect of a flash and is used to simulate a flash.

Based on the foregoing technical solution in this embodiment, the operation of adjusting the color of the liquid crystal display to the set color is preferably: adjusting a color of backlight of the liquid crystal display to the set color.

The light supplementing effect of the liquid crystal display is further affected by the color of the liquid crystal display. The color of the backlight of the liquid crystal display may be adjusted so as to adjust the color of the liquid crystal display, so that the light supplementing effect of the liquid crystal display can be adjusted. Therefore, a light source of the object being photographed can be supplemented to some extent, and the light supplementing effect is improved.

### Embodiment 2

FIG. 2 is a flowchart of a shooting method of an electronic device according to Embodiment 2 of the present invention. Based on the foregoing embodiment, a photo shooting process is specifically used as an example in this embodiment, and a preferred instance solution is provided, where the method includes the following steps:
Step S210: Enter a shooting interface and enable a front-facing camera.

Typically, the front-facing camera is a camera that is on a same side face as a liquid crystal display. After the shooting interface is entered, an initial page is a framing page corresponding to a camera used in a last shooting operation. A interface is selected so as to enter a framing page of the front-facing camera. A switching and selecting manner of the front-facing camera and a rear-facing camera has been disclosed in the prior art, and details are not described herein. Certainly, in addition to a manner of entering the shooting interface and selecting the front-facing camera mentioned above, a method for enabling the front-facing camera to prepare for shooting may be performed in another manner, for example, pressing a specific shortcut key to enable the front-facing camera to prepare for shooting, which is not limited in this embodiment.

Step S220: Determine whether a shooting icon is tapped, where if it is determined that the shooting icon is tapped, that is, if a user is satisfied with a framing image, determines to shoot the image, and taps the shooting icon, perform step S230; and if it is not determined that the shooting icon is tapped, that is, if the user is not satisfied with the framing image, continue to perform step S220.

Step S230: Enable backlight, adjust to an all white mode and adjust to maximum brightness simultaneously, that is, enable backlight of a liquid crystal display and adjust a pixel grayscale of the liquid crystal display to an all white mode with maximum brightness.

The pixel grayscale of the liquid crystal display is adjusted to the all white mode with the maximum brightness, so that light emitted by the liquid crystal display is brighter and can be used to supplement light to a object being photographed during photo shooting.

Step S240: Determine whether photo shooting is complete, where if photo shooting is complete, perform step S250, and if photo shooting is not complete, continue to perform step S240.

In the foregoing steps, because there is a time delay from tapping of the shooting icon to completing of photo shooting and generating of a photo, the liquid crystal display continues to maintain a previous state in a delay period.

Step S250: Generate a photo, and restore brightness of the backlight, that is, the pixel grayscale of the liquid crystal display is restored to a state before shooting.

The solution in this embodiment is particularly applicable to an electronic device having a front-facing camera and a liquid crystal display that are disposed on a same side, and no light supplementing device is additionally required.

### Embodiment 3

Embodiment 3 of the present invention provides a shooting apparatus of an electronic device, where the apparatus includes: a camera enabling module, configured to enable a front-facing camera after a shooting interface is entered; and a liquid crystal display adjusting module, configured to: when the front-facing camera is used to perform shooting, adjust a pixel grayscale of the liquid crystal display to a set grayscale value and/or adjust a color of the liquid crystal display to a set color, so as to supplement light to a object be photographed.

The apparatus provided in this embodiment may execute a shooting method of an electronic device provided in an embodiment of the present invention and has corresponding function modules and beneficial effects, and details are not described herein.

In the foregoing solution, preferably, the liquid crystal display adjusting module includes a grayscale adjusting unit, specifically configured to: when the front-facing camera is used to perform shooting, adjust pixel transmittance of the liquid crystal display and/or adjust brightness of backlight of the liquid crystal display, so as to adjust the pixel grayscale of the liquid crystal display to the set grayscale value.

In the foregoing solution, preferably, the liquid crystal display adjusting module may be specifically configured to: when the front-facing camera is used to perform shooting, adjust the liquid crystal display to an all white mode.

In the foregoing solution, preferably, the liquid crystal display adjusting module further includes a color adjusting unit, specifically configured to: when the front-facing camera is used to perform shooting, adjust a color of backlight of the liquid crystal display, so as to adjust the color of the liquid crystal display to the set color.

The liquid crystal display adjusting module may be a hardware and/or software module. That the liquid crystal display adjusting module adjusts the pixel grayscale and/or the color of the liquid crystal display may be that when the front-facing camera is used to perform shooting, a system automatically triggers an adjustment instruction to perform adjustment, or may be that during shooting, a user selects an adjustment enabling instruction to perform adjustment. The present invention is not limited thereto.

### Embodiment 4

An electronic device provided in Embodiment 4 of the present invention includes a front-facing camera, a liquid crystal display, and a shooting apparatus of an electronic device provided in any embodiment of the present invention.

The electronic device is preferably a mobile terminal.

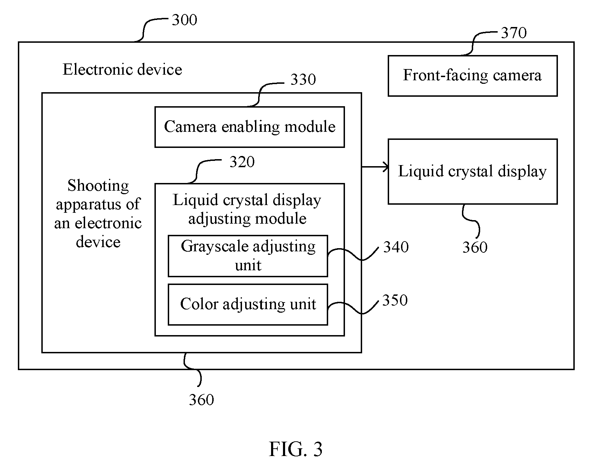

FIG. 3 is a schematic structural diagram of the electronic device provided in Embodiment 4 of the present invention. The electronic device 300 includes a liquid crystal display 360, a front-facing camera 370, and a shooting apparatus 310 of an electronic device. The shooting apparatus 310 of an electronic device includes a liquid crystal display adjusting module 320 and a camera enabling module 330. The liquid crystal display adjusting module 320 includes a grayscale adjusting unit 340 and a color adjusting unit 350.

Before shooting, the electronic device enables the front-facing camera 340 by using the camera enabling module 330, so as to prepare for shooting; when the front-facing camera 340 is used to perform shooting, the shooting apparatus 310 of the electronic device adjusts a pixel grayscale of the liquid crystal display to an all white mode by using the liquid crystal display adjusting module 320, and brightness of backlight of the liquid crystal display 360 to maximum brightness simultaneously, so as to supplement light to an object being photographed in a dim or low-light environment. The shooting apparatus 310 of an electronic device may further adjust a color of the backlight of the liquid crystal display 360 by using the color adjusting unit 350 in the liquid crystal display adjusting module 320, so as to supplement a light supplementing source of an object being photographed.

The electronic device may be a mobile phone or a tablet computer, for example.

By using the foregoing shooting apparatus of an electronic device, the electronic device provided in this embodiment executes a shooting method of an electronic device provided in an embodiment of the present invention and has corresponding function modules and beneficial effects, and details are not described herein.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A shooting method of an electronic device, comprising:
enabling a front-facing camera to prepare for shooting; and
when the front-facing camera is used to perform shooting, adjustinga pixel grayscale of a liquid crystal display to a set grayscale value and/or adjusting a color of the liquid crystal display to a set color, so as to supplement light to an object being photographed.

2. The method according to claim 1, wherein the adjusting a pixel grayscale of a liquid crystal display to a set grayscale value comprises:
adjusting pixel transmittance of the liquid crystal display and/or adjusting brightness of backlight of the liquid crystal display, so as to adjust the pixel grayscale of the liquid crystal display to the set grayscale value.

3. The method according to claim 2, wherein the adjusting brightness of backlight of the liquid crystal display comprises:
adjusting the brightness of the backlight of the liquid crystal display to maximum brightness.

4. The method according to claim 1, wherein the adjusting a pixel grayscale of a liquid crystal display to a set grayscale value and adjusting a color of the liquid crystal display to a set color comprises:
adjusting the liquid crystal display to an all white mode.

5. The method according to claim 1, wherein the adjusting a color of the liquid crystal display to a set color comprises:
adjusting a color of backlight of the liquid crystal display to the set color.

6. A shooting apparatus of an electronic device, comprising:
a camera enabling module, configured to enable a front-facing camera to prepare for shooting; and
a liquid crystal display adjusting module, configured to: when the front-facing camera is used to perform shooting, adjust a pixel grayscale of a liquid crystal display to a set grayscale value and/or adjust a color of the liquid crystal display to a set color, so as to supplement light to an object being photographed.

7. The apparatus according to claim 6, wherein the liquid crystal display adjusting module comprises:
a grayscale adjusting unit, configured to: when the front-facing camera is used to perform shooting, adjust pixel transmittance of the liquid crystal display and/or adjust brightness of backlight of the liquid crystal display, so as to adjust the pixel grayscale of the liquid crystal display to the set grayscale value.

8. The apparatus according to claim 6, wherein the liquid crystal display adjusting module is specifically configured to: when the front-facing camera is used to perform shooting, adjust the liquid crystal display to an all white mode.

9. The apparatus according to claim 6, wherein the liquid crystal display adjusting module further comprises:
a color adjusting unit, configured to: when the front-facing camera is used to perform shooting, adjust a color of backlight of the liquid crystal display, so as to adjust the color of the liquid crystal display to the set color.

10. An electronic device, comprising a front-facing camera and a liquid crystal display and further comprising the shooting apparatus of an electronic device according to any one of claims 6 to 9.

11. The electronic device according to claim 10, wherein the electronic device is a mobile terminal.
